(19) **Europäisches Patentamt / European Patent Office / Office européen des brevets**

(11) **EP 4 696 741 A1**

(12) **EUROPEAN PATENT APPLICATION**
published in accordance with Art. 153(4) EPC

(43) Date of publication:
**18.02.2026 Bulletin 2026/08**

(21) Application number: **24788684.9**

(22) Date of filing: **08.04.2024**

(51) International Patent Classification (IPC):
**C08L 23/04** (2006.01)    **B32B 27/28** (2006.01)
**C08L 23/26** (2025.01)

(52) Cooperative Patent Classification (CPC):
**B32B 27/28; C08L 23/04; C08L 23/26**

(86) International application number:
**PCT/JP2024/014203**

(87) International publication number:
**WO 2024/214660 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2023 JP 2023065133**

(71) Applicant: **Mitsubishi Chemical Corporation
Tokyo 100-8251 (JP)**

(72) Inventor: **OURA, Kohei
Tokyo 100-8251 (JP)**

(74) Representative: **Hoffmann Eitle
Patent- und Rechtsanwälte PartmbB
Arabellastraße 30
81925 München (DE)**

(54) **RESIN COMPOSITION, MULTILAYER STRUCTURE, FILM, PACKAGING MATERIAL, POUCH, SECONDARY MOLDED ARTICLE, AND METHOD FOR PRODUCING RESIN COMPOSITION**

(57)    The following is provided as a resin composition having excellent appearance and mechanical properties even in the case of containing an ethylene-vinyl alcohol copolymer and a polyolefin resin. A resin composition comprising an ethylene-vinyl alcohol copolymer (A), a polyethylene resin (B), and a polyolefin resin (C) having a polar group, wherein the polyethylene resin (B) comprises a structural unit derived from 1-hexene and/or 1-octene, the polyethylene resin (B) has a weight average molecular weight of 230000 or more, and the polyolefin resin (C) having a polar group has a melt flow rate (190°C, load 2160 g) of 0.15 to 50 g/10 min as measured in accordance with JIS K7210: 2014.

EP 4 696 741 A1

## Description

Technical Field

The present invention relates to a resin composition, a multilayer structure, a film, a packaging material, a pouch, a secondary molded article, and a method for producing a resin composition.

Background Art

An ethylene-vinyl alcohol copolymer (hereinafter may be referred to as "EVOH"), a polyolefin resin, or the like is used by being molded into a multilayer structure, such as a packaging film or container for foods, usually through a melt molding method.

For the purpose of reducing the amount of waste of plastic packaging materials and reducing the environmental load, a used resin product made of such an EVOH and a polyolefin resin, resin scraps or ends generated in the process of producing a resin product, or defective products are collected and recycled to produce a resin composition containing an EVOH and a polyolefin again from the collected products. However, an EVOH and a polyolefin resin in the thus-produced resin composition are hardly compatible with each other and are poorly recyclable. Therefore, a compatibilizer is added to the composition for enhancing the compatibility between the EVOH and the polyolefin resin.

For example, JP 2009-97010 A discloses a resin composition containing an ethylene-vinyl acetate copolymer as a compatibilizer and an EVOH having an ethylene content of 70 mol% or more, in which the content of the EVOH is from 1 to 30 parts by mass per 100 parts by mass of the ethylene-vinyl acetate copolymer.

WO 2010/079851 discloses a resin composition containing a polyolefin, an EVOH having an ethylene content of 20 to 60 mol% and a saponification degree of a vinyl acetate unit of 96% or more, a specific amount of a higher fatty acid metal salt having 8 to 22 carbons, a conjugated polyene compound having a boiling point of 20°C or higher, an ethylene-vinyl acetate copolymer (EVAc), and a saponified ethylene-vinyl acetate copolymer (S-EVOH) having an ethylene content of 68 to 98 mol% and a saponification degree of a vinyl acetate unit of 20% or more, wherein the mass ratio of the polyolefin to the EVOH is from 60:40 to 99.9:0.1, and the resin composition contains the higher fatty acid metal salt in an amount of 0.0001 to 10 parts by mass per 100 parts by mass of the total amount of the polyolefin and the EVOH, the conjugated polyene compound in an amount of 0.000001 to 1 part by mass per 100 parts by mass of the total amount of the polyolefin and the EVOH, and the EVAc and the S-EVOH in a total amount of 0.3 parts by mass or more per 100 parts by mass of the total amount of the polyolefin and the EVOH.

Citation List

Patent Literature

    JP 2009-97010 A
    WO 2010/079851

Summary of Invention

Technical Problem

The techniques disclosed in JP 2009-97010 A and WO 2010/079851 can improve the compatibility between the EVOH and the polyolefin resin, but the compatibility is not sufficient. Thus, further improvement is required in terms of appearance (transparency) and mechanical properties, especially in terms of impact resistance. The use of a multilayer structure containing an EVOH and a polyolefin as a recycled raw material is likely to result in poor appearance and mechanical properties. Thus, further improvement is required for the appearance and mechanical properties in the case of using such a recycled raw material.

Thus, the present invention provides a resin composition having excellent appearance and mechanical properties even in the case of containing an EVOH and a polyolefin resin. In particular, the present invention provides a resin composition having excellent transparency and mechanical properties even in the case of using an EVOH and a polyolefin as recycled raw materials.

As a result of diligent studies in view of such circumstances, the present inventor has found that the above problems can be solved by using an EVOH, a polyethylene resin having a specific structural unit and a specific weight average molecular weight, and a polyolefin resin containing a polar group and having a specific melt flow rate.

That is, the present invention has the following aspects.

[1] A resin composition comprising an EVOH (A), a polyethylene resin (B), and a polyolefin resin (C) having a polar group, wherein

the polyethylene resin (B) comprises a structural unit derived from 1-hexene and/or 1-octene,
the polyethylene resin (B) has a weight average molecular weight of 230000 or more, and
the polyolefin resin (C) having a polar group has a melt flow rate (190°C, load 2160 g) of 0.15 to 50 g/10 min as measured in accordance with JIS K7210: 2014.

[2] The resin composition according to [1], wherein a content ratio of the EVOH (A) to the polyethylene resin (B) [(A)/(B)] is from 40/60 to 0.1/99.9 on a mass basis.
[3] The resin composition according to [1] or [2], wherein a content of the structural unit derived from 1-hexene and/or 1-octene in the polyethylene resin (B) is 2.0 mol% or more.
[4] The resin composition according to any of [1] to [3], wherein the polyethylene resin (B) has a density of 0.850 to 0.920 g/cm$^3$.
[5] A multilayer structure comprising at least one layer comprising the resin composition described in any of [1] to [4].
[6] A film comprising the resin composition described in any of [1] to [4].
[7] A packaging material comprising the resin composition described in any of [1] to [4].
[8] A pouch comprising the resin composition described in any of [1] to [4].
[9] A secondary molded article comprising the resin composition described in any of [1] to [4].
[10] A method for producing the resin composition described in any of [1] to [4], the method comprising:
mixing the EVOH (A), the polyethylene resin (B), and the polyolefin resin (C) having a polar group.

Advantageous Effects of Invention

The resin composition of the present invention has excellent transparency and impact resistance. In particular, the resin composition has excellent transparency and mechanical properties even in the case of using an EVOH and a polyolefin as recycled raw materials.

Description of Embodiments

Hereinafter, the present invention will be described in more detail based on embodiments of the present invention, but the present invention is not limited to these embodiments.
In the present specification, the description "x to y" (x and y are any numerals) includes a meaning of "x or more and y or less" and a meaning of "preferably more than x" or "preferably less than y" unless otherwise specified.
The description "x or more" (x is any numeral) includes a meaning of "preferably more than x" unless otherwise specified, and the description "y or less" (y is any numeral) includes a meaning of "preferably less than y" unless otherwise specified.
Furthermore, the description "x and/or y (x and y are any configurations)" means x only, y only, or x and y.
In the present specification, for numerical ranges, the upper limit value or the lower limit value of a numerical range of a certain range can be freely combined with the upper limit value or the lower limit value of a numerical range of another range. In addition, in a numerical range described in the present specification, the upper limit value or the lower limit value of the numerical range can be replaced with a value shown in examples.
Hereinafter, a monomer unit contained in a copolymer resin may be referred to simply as a "unit". For example, a monomer unit based on ethylene may be referred to as an "ethylene unit".
A resin composition according to an embodiment of the present invention (hereinafter referred to as "the present resin composition") contains an EVOH (A), a polyethylene resin (B) having a specific structural unit, and a polyolefin resin (C) having a polar group.
The EVOH (A), the polyethylene resin (B), and the polyolefin resin (C) having a polar group may be virgin products or may be recycled products. Among others, they are preferably recycled products, and from the viewpoint of the effects of the present invention, it is particularly preferable to use, as a raw material, a multilayer structure containing the EVOH (A) and the polyethylene resin (B), or scrap, such as an end material of a multilayer structure.
Hereinafter, the respective components will be described.

EVOH (A)

The EVOH (A) is usually a resin obtained by saponification of an ethylene-vinyl ester copolymer, which is a copolymer of ethylene and a vinyl ester monomer, and is a water-insoluble thermoplastic resin. As the vinyl ester monomer, vinyl acetate is usually used from an economic point of view. Polymerization of ethylene and the vinyl ester monomer can be carried out by any known polymerization method, for example, solution polymerization, suspension polymerization, or emulsion polymerization, and solution polymerization using methanol as a solvent is usually used. The resulting ethylene-vinyl ester copolymer can also be saponified by a known method. The EVOH (A) thus produced mainly comprises a structural unit derived from ethylene and a vinyl alcohol structural unit and usually contains a small amount of a vinyl ester structural unit remaining without being saponified.

As the vinyl ester monomer, vinyl acetate is typically used from the viewpoints of good market availability and good impurity treatment efficiency during production. Examples of other vinyl ester monomers include aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters, such as vinyl benzoate. An aliphatic vinyl ester usually having 3 to 20 carbons, preferably having 4 to 10 carbons, and particularly preferably having 4 to 7 carbons can be used. These may be used alone or in combination of two or more types.

For the vinyl ester monomer, a petroleum-derived raw material, such as naphtha, is usually used. However, a natural gas-derived raw material, such as shale gas, or a plant-derived raw material refined from a component, such as sugar or starch contained in sugarcane, sugar beet, corn, potatoes, or the like, or from a component, such as cellulose contained in a plant, such as rice, wheat, or millet, may be used.

The ethylene unit content of the EVOH (A) can be controlled by the pressure of ethylene in the copolymerization of the vinyl ester monomer and ethylene and is preferably from 20 to 60 mol%. The ethylene unit content is more preferably from 25 to 55 mol%, even more preferably from 28 to 50 mol%, particularly preferably from 30 to 45 mol%, and especially preferably from 32 to 45 mol%. The EVOH (A) preferably contains an EVOH having an ethylene unit content of 32 mol% or more from the viewpoint of further improving mechanical properties and secondary moldability. When the content is too low, the gas barrier properties under high humidity and melt moldability tend to decrease. Conversely, when the content is too high, the gas barrier properties tend to decrease. The ethylene unit content can be measured, for example, based on ISO 14663.

In addition, the degree of saponification of the vinyl ester component in the EVOH (A) can be controlled by the amount of a saponification catalyst (usually an alkaline catalyst, such as sodium hydroxide, is used), temperature, time, and the like in the saponification of the ethylene-vinyl ester copolymer. From the viewpoints of barrier properties, thermal stability, and moisture resistance, the degree of saponification is preferably 80 mol% or more, more preferably 90 mol% or more, even more preferably 98 mol% or more, and particularly preferably 99 mol% or more, and may be 100 mol%.

The degree of saponification of the vinyl ester unit of the EVOH (A) is a value measured based on JIS K6726 (note: the degree is measured in a solution prepared by uniformly dissolving the EVOH in a water/methanol solvent).

The melt flow rate (MFR) (210°C, load 2160 g) of the EVOH (A) is usually from 0.5 to 100 g/10 min, preferably from 1 to 50 g/10 min, and particularly preferably from 3 to 35 g/10 min. When the MFR is too high, the film formability tends to be unstable, whereas when the MFR is too low, the viscosity tends to be too high, which leads to difficulty in melt extrusion.

The MFR is an indicator of the degree of polymerization of the EVOH (A) and can be adjusted by the amount of a polymerization initiator or the amount of a solvent in the copolymerization of ethylene and the vinyl ester monomer.

In the EVOH (A), a polymerizable monomer other than ethylene and the vinyl ester monomer may be copolymerized generally in a range of 5 mol% or less as long as the effects of the present invention are not inhibited. Examples of such a polymerizable monomer include $\alpha$-olefins, such as propylene, isobutene, $\alpha$-octene, $\alpha$-dodecene, and $\alpha$-octadecene; hydroxy group-containing $\alpha$-olefins, such as 3-buten-1-ol, 4-penten-1-ol, and 3-butene-1,2-diol, and hydroxy group-containing $\alpha$-olefin derivatives, such as esterified products and acylated products of a hydroxy group-containing $\alpha$-olefin; hydroxymethylvinylidene diacetates, such as 1,3-diacetoxy-2-methylenepropane, 1,3-dipropionyloxy-2-methylenepropane, and 1,3-dibutyronyloxy-2-methylenepropane; unsaturated carboxylic acids, or their salts, partial alkyl esters, complete alkyl esters, nitriles, amides, or anhydrides; unsaturated sulfonic acids or their salts; vinylsilane compounds; vinyl chloride; and styrene. These may be used alone or in combination of two or more types.

The EVOH (A) may optionally be an EVOH having a primary hydroxyl group in a side chain. Examples of the EVOH having a primary hydroxyl group in a side chain include EVOHs produced by copolymerization of a hydroxy group-containing $\alpha$-olefin and EVOHs having a 1,2-diol structure in a side chain.

In the case of using the EVOH having a primary hydroxyl group in a side chain, the content of the structural unit derived from the monomer having the primary hydroxyl group is usually preferably from 0.1 to 20 mol%, more preferably from 0.5 to 15 mol%, and particularly preferably from 1 to 10 mol% of the EVOH.

An EVOH having no primary hydroxyl group in a side chain is preferable.

Furthermore, as the EVOH (A), a "post-modified" EVOH, such as a urethanized, acetalized, cyanoethylated, or oxyalkylenated EVOH, may also be used.

Only one EVOH (A) may be used, or two or more EVOHs (A) differing in the type of vinyl ester, the ethylene unit content, physical properties, or the like may be used in combination.

From the viewpoint of compatibility, the EVOH preferably comprises only one type, or in the case of using a plurality of EVOHs, the EVOHs preferably comprise those having a melting point of 170°C or higher or those having a melting point of lower than 170°C.

The melting point is measured in accordance with a method described in JIS K7121, in which a sample is placed in a differential scanning calorimeter (DSC), and the temperature is increased to 200°C, then reduced to a temperature lower, by about 50°C, than the glass transition temperature at a cooling rate of 30°C/min, and the temperature is increased again at a temperature increase rate of 10°C/min (second run).

The content of the EVOH (A) in the resin composition is usually from 0.1 to 40 mass%, preferably from 0.3 to 35 mass%, more preferably from 0.5 to 30 mass%, and particularly preferably from 0.7 to 25 mass%. When the content of the EVOH (A) is in the above range, a molded product to be produced tends to have good appearance and excellent mechanical properties.

Polyethylene Resin (B)

The polyethylene resin (B) contains a structural unit derived from ethylene and a structural unit derived from 1-hexene and/or 1-octene. The polyethylene resin (B) contains a structural unit derived from 1-hexene and/or 1-octene, and thus mechanical properties can be enhanced.

The content of the structural unit derived from 1-hexene and/or 1-octene in the polyethylene resin (B) is preferably 2.0 mol% or more, more preferably 3.0 mol% or more, even more preferably 3.2 mol% or more, particularly preferably 3.4 mol% or more, and most preferably 3.6 mol% or more. The upper limit is not particularly limited, but is usually 15 mol%, preferably 13 mol%, more preferably 11 mol%, and particularly preferably 10 mol%. When the content of the structural unit derived from 1-hexene and/or 1-octene is in the above range, the resin composition tends to have good flexibility and excellent mechanical properties.

The density of the polyethylene resin (B) is from 0.850 to 0.920 g/cm$^3$, preferably from 0.860 to 0.920 g/cm$^3$, more preferably from 0.870 to 0.920 g/cm$^3$, and even more preferably from 0.880 to 0.920 g/cm$^3$. When the density is in the above range, the effects of the present invention tend to be easily obtained. The density can be measured with a densitometer.

A specific polyethylene resin (B) is not particularly limited, and examples include linear low-density polyethylene, low-density polyethylene, ultra-low-density polyethylene, medium-density polyethylene, and high-density polyethylene. Other examples of the polyethylene resin (B) include modified polyethylene resins, such as unsaturated carboxylic acid-modified polyethylene resins obtained by graft modification of a polyethylene resin with an unsaturated carboxylic acid or its ester. These may be used alone or in combination of two or more types.

Among these, linear low-density polyethylene is preferable. The raw material for the polyethylene resin may be petroleum-derived or plant-derived.

The polyethylene resin (B) is obtained by polymerization of copolymerization components including ethylene and 1-hexene and/or 1-octene, and the copolymerization components may include an additional α-olefin other than 1-hexene and 1-octene.

Examples of the aforementioned additional α-olefin include α-olefins having 2 to 20 carbons, such as propylene, 1-butene, 1-pentene, 1-heptene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4-methyl-1-pentene, 2-ethyl-1-hexene, and 2,2,4-trimethyl-1-pentene. These may be used alone or in combination of two or more types.

When the polyethylene resin (B) contains a structural unit derived from such an additional α-olefin, the content thereof is usually 5 mol% or less and preferably 2 mol% or less.

The weight average molecular weight of the polyethylene resin (B) calibrated with polystyrene is 230000 or more, more preferably 235000 or more, even more preferably 240000 or more, particularly preferably 245000 or more, especially preferably 250000 or more, and most preferably 253000 or more. The upper limit is not particularly limited, but is usually 400000. When the weight average molecular weight of the polyethylene resin (B) calibrated with polystyrene is 230000 or more, the resin composition tends to have excellent mechanical properties. The weight average molecular weight of the polyethylene resin (B) can be measured by GPC.

The melt flow rate (MFR, 190°C, load 2160 g) of the polyethylene resin (B) measured in accordance with JIS K7210: 2014 is not particularly limited, but is usually from 0.01 to 50 g/10 min and more preferably from 0.1 to 10 g/10 min from the viewpoint of moldability. The MFR can be measured with a melt indexer.

Examples of preferred commercially available products of the polyethylene resin (B) include Innate (registered trademark) available from The Dow Chemical Company, Exceed (registered trademark) available from Exxon Mobil Corporation, and Novatec (registered trademark) available from Japan Polyethylene Corporation.

The content of the polyethylene resin (B) in the resin composition is usually from 60 to 99.8 mass%, preferably from 65 to 99.7 mass%, more preferably from 70 to 99.5 mass%, and particularly preferably from 75 to 99.3 mass%. When the content of the polyethylene resin (B) is in the above range, a molded product to be produced tends to have good appearance and excellent mechanical properties.

The content ratio of the EVOH (A) to the polyethylene resin (B) [(A)/(B)] is preferably from 40/60 to 0.1/99.9, more preferably from 35/65 to 0.3/99.7, even more preferably from 30/70 to 0.5/99.5, and particularly preferably from 25/75 to 0.7/99.3 on a mass basis. When the content ratio of the EVOH (A) to the polyethylene resin (B) is in the above range, a molded product to be produced tends to have good appearance and excellent mechanical properties.

In the present resin composition, a sea-island structure in which the EVOH (A) is dispersed as an island phase in a sea phase (matrix) of the polyethylene resin (B) is preferably formed. When a sea-island structure is formed by the polyethylene resin (B) and the EVOH (A), a molded product to be produced tends to have good appearance and excellent mechanical properties.

Polyolefin Resin (C) Having Polar Group

Examples of the polyolefin resin containing a polar group include a carboxy group-containing polyolefin resin obtained by chemically bonding an unsaturated carboxylic acid or its anhydride to a polyolefin resin by addition reaction, graft reaction, or the like.

Examples of the carboxy group-containing polyolefin resin include maleic anhydride-modified polymers, such as maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. These may be used alone, or two or more types thereof may be used as a mixture.

As the polyolefin resin (C) having a polar group, a maleic anhydride-modified polyolefin resin, such as maleic anhydride-modified polyethylene or a maleic anhydride-modified ethylene-$\alpha$-olefin copolymer, is particularly suitable from the viewpoint of contribution to the effect of suppressing gel formation during melting and heating and the effect of suppressing a decrease in transparency.

The melt flow rate (MFR, 190°C, load 2160 g) of the polyolefin resin (C) having a polar group as measured in accordance with JIS K7210: 2014 is from 0.15 to 50 g/10 min, preferably from 0.4 to 40 g/10 min, more preferably from 0.7 to 30 g/10 min, even more preferably from 1 to 25 g/10 min, and particularly preferably from 1.2 to 20 g/10 min. When the MFR of the polyolefin resin (C) having a polar group is in the above range, the resin composition has excellent processability, and a molded product to be produced has good appearance and excellent mechanical properties. When the melt flow rate of the polyolefin resin (C) having a polar group falls outside the above range, the processability, appearance, and mechanical properties deteriorate.

The melt flow rate expressed by the melt viscosity determined from Equation (1) described below is about 1650000 cP for 0.15 g/10 min and about 205000 cP for 50 g/10 min.

$$\text{MFR (190°C, load 2160 g)} = 3.6126\,[10^{(\log(\eta)\,-\,6.6928)/-1.1363}] - 9.31851\ (1)$$

(1)

In Equation (1), $\eta$ is the melt viscosity at 350°F.

The acid value of the polyolefin resin (C) having a polar group is usually 50 mg KOH/g or less, preferably 30 mg KOH/g or less, and particularly preferably 20 mg KOH/g or less. When the acid value is too high, the number of reactive sites with a hydroxy group in the EVOH tends to increase, a highly polymerized product tends to be formed in a melt-kneading process, and the stability during extrusion processing tends to decrease, making it difficult to produce a good molded product. The lower limit of the acid value is usually 1 mg KOH/g and preferably 2 mg KOH/g. The acid value is measured based on JIS K0070.

The content of the polyolefin resin (C) having a polar group in the resin composition is usually from 0.1 to 40 mass%, preferably from 0.3 to 35 mass%, more preferably from 0.5 to 30 mass%, and particularly preferably from 0.7 to 25 mass%. When the content of the polyolefin resin (C) having a polar group is in the above range, a molded product to be produced tends to have good appearance and excellent mechanical properties.

As long as the effects of the present invention are not inhibited, the present resin composition may contain an additional component other than the components described above, for example, an anti-blocking agent, a processing aid, a resin other than the EVOH (A), the polyethylene resin (B), and the polyolefin resin (C) having a polar group, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinker, and a reinforcing agent such as any type of fibers. These may be used alone or in combination of two or more types.

Method for Producing Resin Composition

The present resin composition can be produced by a production method including a step of mixing the EVOH (A), the polyethylene resin (B), the polyolefin resin (C) having a polar group, and the like, for example, a dry-blending method or a melt-mixing method. These production methods can be optionally combined.

As described above, the EVOH (A), the polyethylene resin (B), and the polyolefin resin (C) having a polar group may be virgin products or may be recycled products. Among others, it is particularly preferable to use, as a raw material, a multilayer structure containing the EVOH (A) and the polyethylene resin (B), or scrap, such as an end material of a multilayer structure, from the viewpoint of the effects of the present invention.

In general, a laminate obtained by laminating a layer containing an EVOH and a layer containing a polyethylene resin is widely used as a packaging material. In the case of recycling such a laminate containing an EVOH and a polyethylene resin as it is to be used as a raw material for a resin composition, the EVOH and the polyethylene resin are poorly compatible with each other, and thus the resin composition tends to have poor appearance and mechanical properties. However, it has been found that the use of the specific polyethylene resin (B) and the polyolefin resin (C) having a polar group provides good appearance and excellent mechanical properties.

In the case of using the aforementioned recycled product, the content thereof is 50 mass% or less, preferably 40 mass% or less, and particularly preferably 30 mass% or less of the present resin composition. When the content of the recycled product is too high, the resin composition tends to have poor transparency and impact resistance.

Examples of the dry-blending method include (i) a method of dry-blending the EVOH resin (A), the polyethylene resin (B), and the polyolefin resin (C) having a polar group, which are in the form of pellets, using a tumbler or the like.

Examples of the melt-mixing method include (ii) a method of melt-kneading a dry-blended product obtained by dry-blending the EVOH (A), the polyethylene resin (B), and the polyolefin resin (C) having a polar group, which are in the form of pellets, and (iii) a method of melt-kneading the EVOH (A), the polyethylene resin (B), and the polyolefin resin (C) having a polar group, which are in a molten state.

As described above, , the different methods described above can be combined. Among those, from the viewpoint of productivity and obtaining a resin composition that exhibits more significant effects of the present invention, a melt-mixing method is preferable, and the method (ii) is particularly preferable. In the case of using the additional thermoplastic resin and an additional blending agent, they are blended by a common process according to a known production method.

The present resin composition produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, oval pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shapes and sizes of the pellet-form EVOH (A), the pellet-form polyethylene resin (B), and the pellet-form polyolefin resin (C) having a polar group used in each of the production methods described above are also preferably the same.

When the present resin composition is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. These compounds may be used alone or in combination of two or more types. The content of the lubricant is usually 5 mass% or less and preferably 1 mass% or less of the present resin composition. The lower limit is usually 0 mass%.

The present resin composition thus produced has excellent transparency and impact resistance.

The total haze of the present resin composition is preferably 60% or less, more preferably 55% or less, and particularly preferably 50% or less.

The total haze is determined by forming the present resin composition into a monolayer film having a thickness of 30 μm and measuring the haze of the film using a haze meter.

The impact strength (g) of the present resin composition is preferably 50 g or more, more preferably 200 g or more, even more preferably 400 g or more, and particularly preferably 600 g or more. The impact strength (g) is the maximum mass of a weight that does not break a monolayer film having a thickness of 30 μm formed from the present resin composition when the weight is attached to a Bakelite dart φ 38 mm, 32 g), and the dart is dropped onto the monolayer film from a height of 0.66 m using a dart impact tester.

The present resin composition is prepared in various forms, such as pellets, powder, or liquid, and is provided as a molding material for various molded products.

Examples of the molded product include a monolayer film molded from the present resin composition, a packaging material, a pouch, and a multilayer structure having at least one layer comprising the present resin composition. The molded product may be subjected to secondary processing described below and formed into a secondary processed product.

Multilayer Structure

A multilayer structure according to an embodiment of the present invention (hereinafter referred to as "the present multilayer structure") has at least one layer comprising the present resin composition. When the layer comprising the present resin composition (hereinafter referred to simply as "the present resin composition layer") is laminated with a layer comprising an additional resin composition containing a thermoplastic resin other than the present resin composition as a main component (hereinafter referred to simply as "additional resin layer"), strength can be further imparted, the present resin composition layer can be protected from the influence of moisture or the like, and other functions can be imparted.

Examples of the thermoplastic resin include polyethylene resins, such as linear low-density polyethylene, low-density polyethylene, ultra-low-density polyethylene, medium-density polyethylene, high-density polyethylene, ethylene-propylene (block and random) copolymers, and ethylene-α-olefin (α-olefin having 4 to 20 carbons) copolymers; polypropylene resins, such as polypropylene and propylene-α-olefin (α-olefin having 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain and a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate ester copolymers; polyester resins; polyamide resins (including copolymerized polyamides); poly(vinyl chloride); poly(vinylidene chloride); acrylic resins; polystyrene resins; vinyl ester resins; polyester elastomers; polyurethane elastomers; polystyrene elastomers; halogenated polyolefins, such as chlorinated polyethylene and chlorinated polypropylene; and aromatic or aliphatic polyketones. These may be used alone or in combination of two or more types.

Among these, the thermoplastic resin is preferably a polyamide resin, a polyolefin resin, a polyester resin, or a polystyrene resin, which is a hydrophobic resin, and more preferably a polyolefin resin, such as a polyethylene resin, a polypropylene resin, a polycyclic olefin resin, or an unsaturated carboxylic acid-modified polyolefin resin thereof.

When the present resin composition layer is denoted by a (a1, a2, ...) and the additional resin layer is denoted by b (b1, b2, ...), the layer configuration of the present multilayer structure can be any combination, such as a/b, b/a/b, a/b/a, a1/a2/b, a/b1/b2, b2/b1/a/b1/b2, or b2/b1/a/b1/a/b1/b2. When a recycled layer containing a mixture of the present resin composition and a thermoplastic resin other than the present resin composition, which is obtained by remelt-molding an end, a defective product, or the like generated in the process of producing the multilayer structure, is denoted by R, the layer configuration can also be b/R/a, b/R/a/b, b/R/a/R/b, b/a/R/a/b, b/R/a/R/a/R/b, or the like. The number of layers of the present multilayer structure in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin is appropriately selected depending on the type of thermoplastic resin used for the additional resin layer "b". Representative examples include carboxy group-containing modified polyolefin polymers obtained by chemically bonding an unsaturated carboxylic acid or its anhydride to a polyolefin resin by addition reaction, graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. These may be used alone or in combination of two or more types.

In the present multilayer structure, in the case of using adhesive resin layers between the present resin composition layer and the additional resin layer, an adhesive resin having excellent hydrophobicity is preferably used because the adhesive resin layers are located on both sides of the present resin composition layer.

The additional resin described above or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present invention is not impeded (e.g., 30 mass% or less, and preferably 10 mass% or less relative to the entire resin). These may be used alone or in combination of two or more types.

The present resin composition layer and the additional resin layer described above can be laminated (including the case of interposing an adhesive resin layer) by a known method. Examples of the method include a method of melt-extrusion laminating the additional resin on a film, a sheet, or the like of the present resin composition, a method of melt-extrusion laminating the present resin composition on the additional resin layer, a method of co-extruding the present resin composition and the additional resin, a method of dry laminating the present resin composition (layer) and the additional resin composition or the additional resin layer using a known adhesive, such as an organic titanium compound, an isocyanate compound, a polyester compound, or a polyurethane compound, and a method of applying a solution of the present resin composition onto the additional resin and then removing the solvent. Among these, preferred is a production method including a step of melt-molding the present resin composition layer, and specifically preferred is a co-extrusion method, from the viewpoints of cost and the environment.

The present multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is too low, stretchability deteriorates, whereas when the stretching temperature is too high, a stable stretched state is difficult to maintain.

The present multilayer structure after the stretching treatment may be subjected to heat setting for the purpose of imparting dimensional stability. The heat setting can be carried out by a well-known means; for example, the stretch-treated present multilayer structure is heat-treated usually at 80 to 180°C and preferably at 100 to 165°C usually for about 2 to 600 seconds while the stretch-treated present multilayer structure is kept in a state of tension.

In the case of using the stretch-treated present multilayer structure as a shrink film, in order to impart heat shrinkability, the stretch-treated present multilayer structure is not subjected to the heat setting described above, but is subjected to a treatment such as application of cool air to the present multilayer structure after the stretching treatment to cool-set the structure.

The thickness of the present multilayer structure (including a stretched one), and the thicknesses of the present resin composition layer, the additional resin layer, and the adhesive resin layer constituting the multilayer structure cannot be generally defined because they are determined depending on the layer configuration, the type of the additional resin, the type of the adhesive resin, the application or packaging form, the required physical properties, and the like. However, the thickness of the present multilayer structure (including a stretched one) is usually from 10 to 5000 $\mu$m, preferably from 30 to 3000 $\mu$m, and particularly preferably from 50 to 2000 $\mu$m. The thickness of the present resin composition layer is usually from 1 to 500 $\mu$m, preferably from 3 to 300 $\mu$m, and particularly preferably from 5 to 200 $\mu$m. The thickness of the additional resin layer is usually from 5 to 3000 $\mu$m, preferably from 10 to 2000 $\mu$m, and particularly preferably from 20 to 1000 $\mu$m. The thickness of the adhesive resin layer is usually from 0.5 to 250 $\mu$m, preferably from 1 to 150 $\mu$m, and particularly preferably from 3 to 100 $\mu$m.

Furthermore, the thickness ratio of the present resin composition layer to the additional resin layer (the present resin composition layer/the additional resin layer) in the present multilayer structure is usually from 1/99 to 50/50, preferably from 5/95 to 45/55, and particularly preferably from 10/90 to 40/60, in terms of the ratio of the thickest layers to each other when there is a plurality of layers for each type of layer. The thickness ratio of the present resin composition layer to the adhesive resin layer (the present resin composition layer/the adhesive resin layer) in the present multilayer structure is usually from 10/90 to 99/1, preferably from 20/80 to 95/5, and particularly preferably from 50/50 to 90/10, in terms of the ratio of the thickest layers to each other when there is a plurality of layers for each type of layer.

A multilayer container, such as a cup, a tray, a packaging material, or a pouch, can also be produced using the present multilayer structure. In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

If necessary, the multilayer container to be produced can be further subjected to secondary processing, such as heat treatment, cooling treatment, rolling treatment, printing treatment, dry lamination treatment, solution or melt coating treatment, bag-making processing, deep drawing processing, box processing, tube processing, or split processing, to thereby form a secondary processed product.

A monolayer film molded from the present resin composition or a container or lid material comprising the present multilayer structure, such as a bag, a cup, a tray, a tube, a bottle, a packaging material, or a pouch is useful for various packaging material and containers for general foods, seasonings such as mayonnaise and dressing, fermented foods such as miso. oil and/or fat foods such as salad oil, beverages, cosmetics, pharmaceuticals, and the like.

Examples

Hereinafter, the present invention will be specifically described with reference to Examples. However, the present invention is in no way limited to the following Examples.

Prior to the Examples, the following materials were provided.

EVOH (A)

· A1: "Soarnol (registered trademark) DC3203RB" available from Mitsubishi Chemical Corporation (ethylene unit content 32 mol%, MFR 3.8 g/10 min (210°C, load 2160 g), density 1.19 g/cm$^3$)

Polyethylene Resin (B)

· B1: "Exceed (registered trademark) 1012MA" available from Exxon Mobil Corporation (copolymer of ethylene and 1-hexene, 1-hexene-derived structural unit content 3.9 mol%, density 0.912 g/cm$^3$, MFR (190°C, load 2160 g) 1.0 g/10 min, weight average molecular weight (calibrated with polystyrene) 258000)

· B2: "Exceed (registered trademark) XP 8784" available from Exxon Mobil Corporation (copolymer of ethylene and 1-hexene, 1-hexene-derived structural unit content 4.6 mol%, density 0.914 g/cm$^3$, MFR (190°C, load 2160 g) 0.80 g/10 min, weight average molecular weight (calibrated with polystyrene) 269000)

· B3: "Innate (registered trademark) ST50" available from The Dow Chemical Company (copolymer of ethylene and 1-octene, 1-octene-derived structural unit content 3.2 mol%, density 0.918 g/cm$^3$, MFR (190°C, load 2160 g) 0.85 g/10 min, weight average molecular weight (calibrated with polystyrene) 251000)

· B4: "Innate (registered trademark) TH60" available from The Dow Chemical Company (copolymer of ethylene and 1-octene, 1-octene-derived structural unit content 4.0 mol%, density 0.912 g/cm$^3$, MFR (190°C, load 2160 g) 0.85 g/10 min, weight average molecular weight (calibrated with polystyrene) 253000)

· B5: "Anteo (registered trademark) FK2715" available from Borouge (copolymer of ethylene and 1-hexene, 1-hexene-derived structural unit content 1.6 mol%, density 0.927 g/cm$^3$, MFR (190°C, load 2160 g) 1.3 g/10 min, weight average molecular weight (calibrated with polystyrene) 240000)

· B'1: "Novatec (registered trademark) UF641" available from Japan Polyethylene Corporation (copolymer of ethylene and 1-butene, density 0.927 g/cm$^3$, MFR (190°C, load 2160 g) 2.1 g/10 min, weight average molecular weight (calibrated with polystyrene) 220000)

· B'2: "Novatec (registered trademark) UF421" available from Japan Polyethylene Corporation (copolymer of ethylene and 1-butene, density 0.926 g/cm$^3$, MFR (190°C, load 2160 g) 0.9 g/10 min, weight average molecular weight (calibrated with polystyrene) 262000)

· B'3: "ELITE (registered trademark) 5400G" available from The Dow Chemical Company (copolymer of ethylene and 1-octene, 1-octene-derived structural unit content 3.6 mol%, density 0.916 g/cm$^3$, MFR (190°C, load 2160 g) 1.0 g/10 min, weight average molecular weight (calibrated with polystyrene) 228000)

The weight average molecular weight of the polyethylene resin (B) and the content of each copolymerization component are values measured by evaluation methods described below.

Polyolefin Resin (C) Having Polar Group

· C1: "Modic (registered trademark) M533" available from Mitsubishi Chemical Corporation (density 0.92 g/cm$^3$, MFR (190°C, load 2160 g) 2.5 g/10 min)

Example 1

A dry blend of 5 parts by mass of the EVOH (A1), 90 parts by mass of the polyethylene resin (B1), and 5 parts by mass of the polyolefin resin (C1) containing a polar group was melt-kneaded with a Φ 40-mm single-screw extruder, to produce a resin composition.
The resulting resin composition was formed into a 30-μm monolayer film with a monolayer cast molding machine. The film-forming conditions are as follows.

Film-Forming Conditions

   Φ 40-mm Single-screw extruder (barrel temperature 220°C)
   Die temperature: 220°C
   Drawing speed: 2.0 to 2.5 m/min

Examples 2 to 5 and Comparative Examples 1 to 3

Resin compositions of Examples 2 to 5 and Comparative Examples 1 to 3 were produced in the same manner as in Example 1 except for changing the types of polyethylene resin (B) as shown in Table 1 below. A monolayer film having a thickness of 30 μm was formed from each of the produced resin compositions of Examples 2 to 5 and Comparative Examples 1 to 3 in the same manner as in Example 1.

Measurement of Weight Average Molecular Weight of Polyethylene Resin (B)

Each polyethylene resin was weighed and dissolved in a 1,2,4-trichlorobenzene solvent by stirring at 140°C for 1 hour. High-temperature GPC measurement was carried out at 140°C using the dissolved sample. A calibration curve was prepared using standard polystyrenes "product numbers: 0005204, 0005205, 0005206, 0005207, 0005208, 0005209, 0005210, 0005211, 0005212, 0005213, 0005214, 0005215, 0005218, 0005220, and 0005221" available from Tosoh Corporation. Thus, the resulting values are molecular weights calibrated with polystyrene.

Structural Analysis of Polyethylene Resin (B)

Each polyethylene resin was weighed and dissolved in a deuterated ortho-dichlorobenzene solvent at 130°C. A $^{13}$C NMR spectrum was measured at 120°C using the dissolved sample. The standard of the chemical shift was set to 30.0 ppm for the signal of the main chain of the polyethylene resin.
The following total haze and impact strength were evaluated using the resulting monolayer films of Examples 1 to 5 and Comparative Examples 1 to 3. The results are shown in Table 1 below.

Evaluation of Total Haze

The total haze of the monolayer film was measured using a haze meter ("NDH4000" available from Nippon Denshoku Industries Co., Ltd.). A lower value of the total haze indicates better transparency.

Evaluation of Impact Strength (Dart Impact)

A weight was attached to a Bakelite dart (Φ 38 mm, 32 g), and the dart was dropped onto the monolayer film from a height of 0.66 m using a dart impact tester (available from Toyo Seiki Seisaku-sho, Ltd.). The appearance of the monolayer film after the dart was dropped was visually observed, and the maximum mass of the weight at which no breakage was observed was determined as the dart impact strength of the monolayer film.

[Table 1]

|  | Polyethylene resin (B) | Total haze [%] | Impact strength [g] |
|---|---|---|---|
| Example 1 | B1 | 41.8 | > 690 |
| Example 2 | B2 | 45.7 | > 690 |
| Example 3 | B3 | 38.0 | > 690 |

(continued)

|  | Polyethylene resin (B) | Total haze [%] | Impact strength [g] |
|---|---|---|---|
| Example 4 | B4 | 38.8 | > 690 |
| Example 5 | B5 | 35.7 | 140 |
| Comparative Example 1 | B'1 | 49.1 | 30 |
| Comparative Example 2 | B'2 | 57.0 | 110 |
| Comparative Example 3 | B'3 | 49.2 | 590 |

As can be seen from the results in Table 1 above, in Examples 1 to 5 wherein the specific polyethylene resin (B) was used, transparency and impact strength were superior to those in Comparative Examples 1 and 2 wherein the polyethylene resin not containing a structural unit derived from 1-hexene and/or 1-octene was used.

In Comparative Example 3 wherein the polyethylene resin containing a structural unit derived from 1-hexene and/or 1-octene but having a weight average molecular weight outside the specific range was used, the total haze was deteriorated, and the compatibility between transparency and mechanical properties was not achieved.

Specific embodiments of the present invention have been described in the above Examples, but the above Examples are merely illustrative and are not to be construed as limiting. Various modifications apparent to those skilled in the art are intended to be within the scope of the present invention.

Industrial Applicability

The present resin composition has excellent transparency and impact strength and thus can be suitably used as a packaging material for various packaging material containers and packaging films for general foods, seasonings such as mayonnaise and dressings, fermented foods such as miso, oil and/or fat foods such as salad oils, beverages, cosmetics, pharmaceuticals, and the like.

**Claims**

1. A resin composition comprising an ethylene-vinyl alcohol copolymer (A), a polyethylene resin (B), and a polyolefin resin (C) having a polar group, wherein

   the polyethylene resin (B) comprises a structural unit derived from 1-hexene and/or 1-octene,
   the polyethylene resin (B) has a weight average molecular weight of 230000 or more, and
   the polyolefin resin (C) having a polar group has a melt flow rate of 0.15 to 50 g/10 min at 190°C under a load of 2160 g, as measured in accordance with JIS K7210: 2014.

2. The resin composition according to claim 1, wherein a content ratio of the ethylene-vinyl alcohol copolymer (A) to the polyethylene resin (B) [(A)/(B)] is from 40/60 to 0.1/99.9 on a mass basis.

3. The resin composition according to claim 1 or 2, wherein a content of the structural unit derived from 1-hexene and/or 1-octene in the polyethylene resin (B) is 2.0 mol% or more.

4. The resin composition according to claim 1 or 2, wherein the polyethylene resin (B) has a density of 0.850 to 0.920 g/cm$^3$.

5. A multilayer structure comprising at least one layer comprising the resin composition of claim 1 or 2.

6. A film comprising the resin composition of claim 1 or 2.

7. A packaging material comprising the resin composition of claim 1 or 2.

8. A pouch comprising the resin composition of claim 1 or 2.

9. A secondary molded article comprising the resin composition of claim 1 or 2.

10. A method for producing the resin composition of claim 1 or 2, the method comprising:
    mixing the ethylene-vinyl alcohol copolymer (A), the polyethylene resin (B), and the polyolefin resin (C) having a polar group.

## INTERNATIONAL SEARCH REPORT

| | |
|---|---|
| International application No. | |
| | **PCT/JP2024/014203** |

**A. CLASSIFICATION OF SUBJECT MATTER**

*C08L 23/04*(2006.01)i; *B32B 27/28*(2006.01)i; *C08L 23/26*(2006.01)i
FI:  C08L23/04; C08L23/26; B32B27/28 102

According to International Patent Classification (IPC) or to both national classification and IPC

**B. FIELDS SEARCHED**

Minimum documentation searched (classification system followed by classification symbols)

C08L23/04; B32B27/28; C08L23/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-249595 A (TORAY INDUSTRIES, INC.) 06 September 2002 (2002-09-06) claims, paragraphs [0001], [0010], [0016]-[0019], [0047], [0049], example 4 | 1-10 |
| A | WO 2022/059418 A1 (FUJIFILM CORPORATION) 24 March 2022 (2022-03-24) paragraph [0236] | 1-10 |
| A | ダウ・ケミカル日本グループ, ダウ、ＩＮＮＡＴＥ（登録商標）ＴＦポリエチレン樹脂を発表, 29 July 2020, pp. 1-4, https://jp.dow.com/ja-jp/news/dow-introduces-innate-tf-polyethylene-resins.html, non-official translation (DOW CHEMICAL JAPAN GROUP. DOW. Introduces INNATE® TF polyethylene resin.) pp. 1-3 | 1-10 |
| A | JP 11-254610 A (KOHJIN CO., LTD.) 21 September 1999 (1999-09-21) paragraph [0026] | 1-10 |

☐ Further documents are listed in the continuation of Box C.     ☑ See patent family annex.

| | |
|---|---|
| * Special categories of cited documents: | |
| "A"  document defining the general state of the art which is not considered to be of particular relevance | "T"  later document published after the international filing date or priority date and not in conflict with the application but cited to understand the principle or theory underlying the invention |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **10 June 2024** | **25 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/014203**

| Patent document cited in search report | | | Publication date (day/month/year) | Patent family member(s) | | | Publication date (day/month/year) |
|---|---|---|---|---|---|---|---|
| JP | 2002-249595 | A | 06 September 2002 | (Family: none) | | | |
| WO | 2022/059418 | A1 | 24 March 2022 | CN | 116194839 | A | |
| JP | 11-254610 | A | 21 September 1999 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009097010 A

- WO 2010079851 A